Europäisches Patentamt

European Patent Office

Office européen des brevets

(19)

(11) Veröffentlichungsnummer : **0 165 948**
**B1**

(12) **EUROPÄISCHE PATENTSCHRIFT**

(45) Veröffentlichungstag der Patentschrift :
**20.01.88**

(21) Anmeldenummer : **85900048.1**

(22) Anmeldetag : **30.11.84**

(86) Internationale Anmeldenummer :
**PCT/DE 84/00255**

(87) Internationale Veröffentlichungsnummer :
**WO/8502552 (20.06.85 Gazette 85/14)**

(51) Int. Cl.⁴ : **B 01 D 13/00, C 02 F 1/44**

(54) **VORRICHTUNG ZUR WASSERENTSALZUNG UND -REINIGUNG DURCH UMGEKEHRTE OSMOSE UND ULTRAFIL-TRATION.**

(30) Priorität : **15.12.83 DE 3345329**

(43) Veröffentlichungstag der Anmeldung :
**02.01.86 Patentblatt 86/01**

(45) Bekanntmachung des Hinweises auf die Patenter-teilung : **20.01.88 Patentblatt 88/03**

(84) Benannte Vertragsstaaten :
**FR GB NL SE**

(56) Entgegenhaltungen :
**FR-A- 2 170 148**
**GB-A- 2 012 614**
**US-A- 3 494 469**

(73) Patentinhaber : **GKSS-FORSCHUNGSZENTRUM GEESTHACHT GMBH**
**Max-Planck-Strasse**
**D-2054 Geesthacht-Tesperhude (DE)**

(72) Erfinder : **TIMM, Hans**
**Osterheese 6**
**D-2054 Geesthacht (DE)**
Erfinder : **FRIES, Sören**
**Teichberg 33**
**D-2054 Geesthacht (DE)**
Erfinder : **WENZLAFF, Axel**
**Bundesstrasse 91**
**D-2050 Escheburg (DE)**

(74) Vertreter : **Schöning, Hans-Werner, Dipl.-Ing.**
**Adenauerallee 28 (Postfach 102 905)**
**D-2000 Hamburg 1 (DE)**

## Beschreibung

Die Erfindung betrifft eine Vorrichtung zur Wasserentsalzung und Wasserreinigung durch Umgekehrte Osmose und Ultrafiltration, bestehend aus zwischen zwei Endplatten eingespannten, abwechselnd aufeinandergestapelten tellerartigen Trägerplatten und Wasserleitplatten, zwischen Trägerplatten und Leitplatten liegenden, mit einer Filterschicht hinterlegten ringförmigen Membranen, welche membranseitig vom Rohwasser überströmt werden und filterseitig das Permeat ableiten, und am Umfang jeder Wasserleitplatte vorgesehene, zwischen Rohwasser- und Permeatableit-Pfaden liegende Dichtungsanordnungen, wobei die Trägerplatten außerhalb der Ränder der Leitplatten mit einem verdickten Randteil aufeinander liegen und über einen durch verminderte Dicke der Trägerplattenrandteile erzeugten Spalt einen Permeatableitpfad bilden, der mit den Filterschichten der Membranen in Verbindung steht.

Vorrichtungen der vorgenannten Art, wie sie zum Beispiel in der DE-PS 28 02 780 der Anmelderin beschrieben sind, müssen regelmäßig gewartet werden, d. h. man muß die Vorrichtungen von Zeit zu Zeit mit neuen Membranen versehen oder aber zumindestens die Membranen von Ablagerungen, wie Algen, Faulstoffen und dgl. befreien. Da eine solche Wartung stets einen (mindestens partiellen) Betriebsausfall beinhaltet, kommt es darauf an, daß die Vorrichtungen zur Wasserentsalzung und -reinigung nicht nur schnell zerlegbar sind, sondern auch sehr schnell ohne jegliche Ausrichtungs- und Abdichtungsfehler wieder neu montiert werden können. Diese Neuinstallation war bisher außerordentlich zeit- und arbeitsträchtig, da die verwendeten Dichtungen stets mehrteilig waren und auch aus verschiedenen Werkstoffen bestanden. U-förmige Randabdichtungen der Wasserleitplatten mußten auf den Zahnkranz der Wasserleitplatten mühsam aufgefädelt werden und es mußten auch Halte- bzw. Wasserleitringe eingesetzt werden, mit denen einerseits die Ringmembranen und Filterschichten in ihrer Lage gehalten werden sollen und die andererseits auch die Trägerplattenabdichtungen auf dem Umfang abstützen, damit sich diese nicht aus ihrer Lage verschieben können, wenn der Rohwasserstrom im Bereich der Leitplattenränder umgeleitet wird.

Aufgabe der vorliegenden Erfindung ist daher eine Verbesserung der Umfangs-Dichtungen bei Vorrichtungen der einleitend genannten Art, die die Montage eines Modulstapels wesentlich leichter und schneller durchführen läßt.

Zur Lösung der vorgenannten Aufgabe wird erfindungsgemäß die einleitend geschilderte Vorrichtung so ausgebildet, daß die einzelnen Dichtungsanordnungen aus zwei spiegelbildlich gleichen, im wesentlichen U-förmig profilierten Dichtringen aus einem nachgiebigen Kunststoff bestehen, die paarweise mit einem ihrer im wesentlichen radial gerichteten Schenkel in der Mittelebene der Leitplatte außerhalb des Leitplattenumfanges dichtend aneinander stoßen, die jeweils mit dem außenliegenden zweiten Schenkel eine benachbarte Membran dichtend beaufschlagen und an der Außenfläche ihres Jochteiles zur Bildung des Permeatabflußpfades gerieft sind.

Die erfindungsgemäß vorgesehenen U-förmig profilierten Dichtungsringe haben nunmehr keinerlei Verbindung mehr mit der Leitplatte, die mittig zwischen ihnen liegt und vom Rohwasser umströmt werden kann. Zur gleichen Zeit können sich die beiden Außenschenkel eines Dichtungsringpaares an zwei gegenüberliegenden Membranen abstützen, so daß das Rohwasser sicher von den Permeatabflußpfaden abgetrennt ist. Dank des flexiblen Kunststoffmaterials kommt es in der Mittelebene der Leitplatte — und zwar außerhalb der Leitplatte — zu einem dichtenden Aneinanderliegen der beiden benachbarten Schenkel eines Dichtungsringpaares. Aus der Verwendung nur eines einzigen Dichtungsmaterials und einer einzigen Form eines Dichtungsringes resultiert verständlicherweise auch noch eine erhebliche Kosteneinsparung.

Weitere Merkmale der Erfindung ergeben sich aus den Unteransprüchen.

Nachfolgend wird anhand der Zeichnungen eine bevorzugte Ausführungsform der Erfindung beispielsweise im einzelnen beschrieben.

Es zeigen

Fig. 1 einen Radialschnitt durch eine zum Stande der Technik gehörige Vorrichtung zur Wasserentsalzung und -reinigung gemäß DE-PS 28 02 780,

Fig. 2 einen gegenüber der Fig. 1 vergrößerten Teilquerschnitt durch die Ränder einer Endplatte und einer benachbarten Trägerplatte,

Fig. 3 eine der Fig. 2 ähnliche Darstellung einer erfindungsgemäßen Dichtanordnung, welche die Dichtungsanordnung gemäß Fig. 1 und 2 ersetzt und

Fig. 4 in noch stärker vergrößertem Maßstabe eine axiale Teilansicht eines erfindungsgemäßen Dichtungsringes.

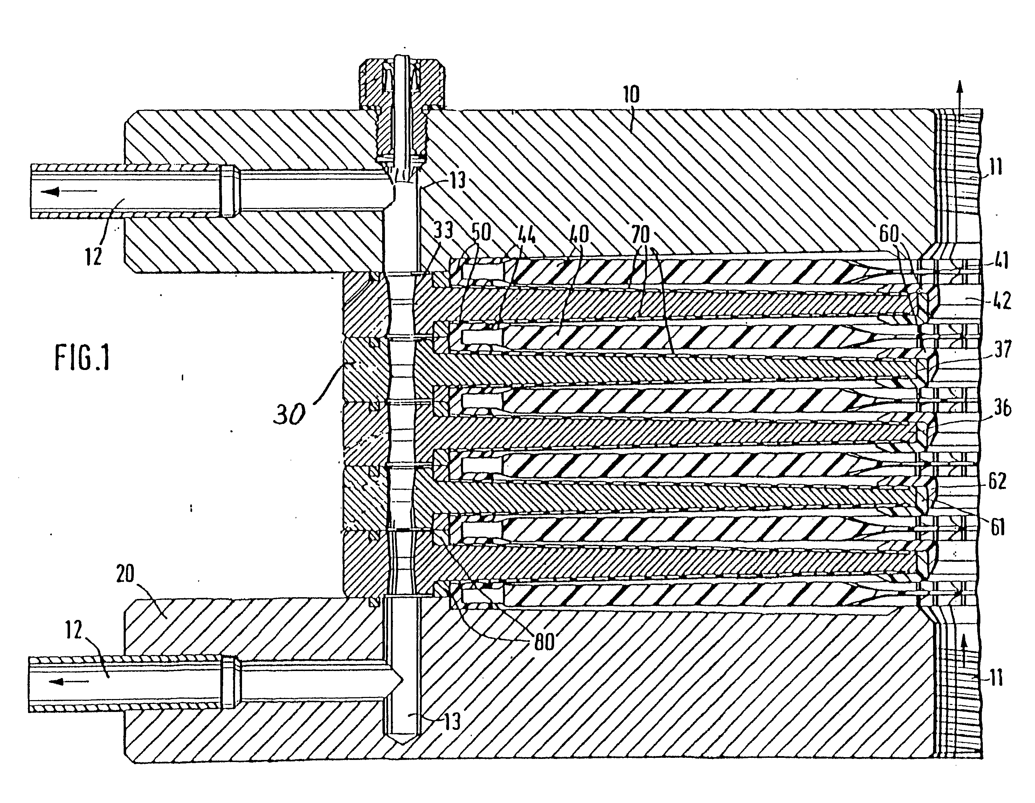

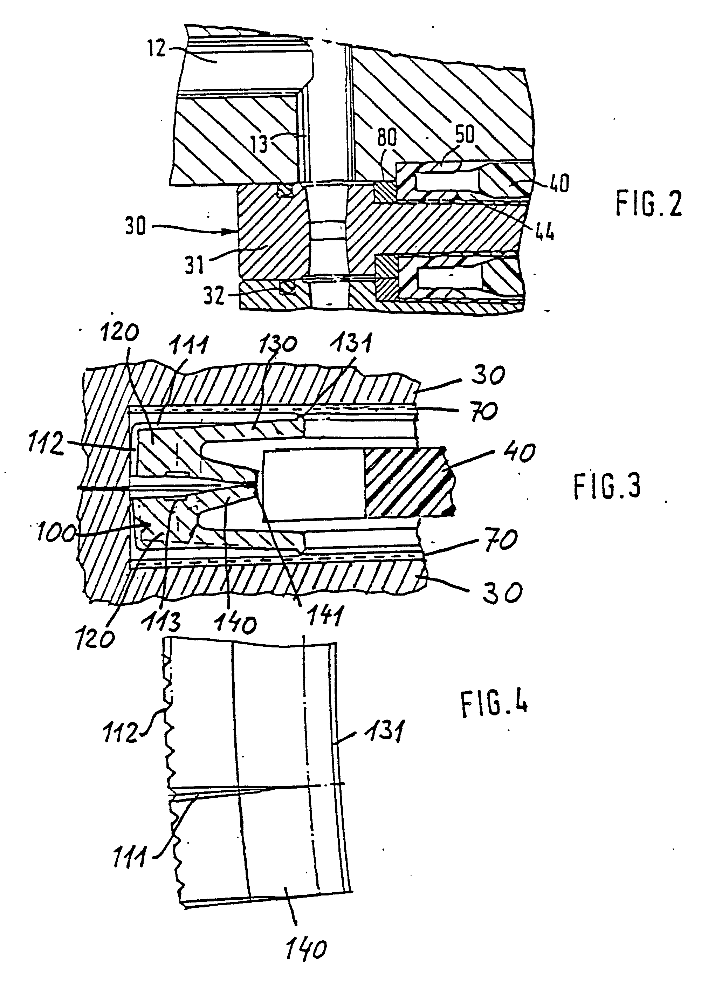

Es wird zunächst anhand der Figuren 1 und 2 eine Vorrichtung zur Wasserentsalzung und -reinigung durch Umgekehrte Osmose und Ultrafiltration beschrieben, wie sie in der Patentschrift der Anmelderin 28 02 780 offenbart ist.

Die Vorrichtung gemäß Fig. 1 besteht aus zwei relativ dickwandigen Endplatten 10 und 20. Zwischen diesen Endplatten 10 liegen vorzugsweise aus Kunststoff bestehende Trägerplatten 30 und Wasserleitplatten 40, die abwechselnd gestapelt angeordnet sind. An den Leitplatten befinden sich äußere Dichtungen 50 und innere Dichtungen 60. Auf den gegenüberliegenden Seiten der Trägerplatten liegen die mit Filterschichten unterlegten Membranen 70. Als radiale äußere Begrenzungen der Leitplatten 40 und deren äußeren Dichtungen 50 dienen Halteringe 80. Zum Zusammenhalten des Plattenstapels dient eine Mehrzahl von Spannbolzen, die um den Umfang des Plattenstapels herum angeordnet und in den Endplatten 10 und 20 verankert sind.

In der Mitte der vorzugsweise als Kreisscheibe ausgebildeten Endplatten 10 und 20 befindet sich eine Mittelöffnung 11, durch die das zu entsalzende Rohwasser, beispielsweise entsprechend der eingezeichneten Pfeilrichtung hindurchgeleitet wird. In den Endplatten 10 und 20 sind eine oder mehrere radial gerichtete Permeat-Ableitbohrungen 12 vorgesehen. Diese Bohrungen 12 münden in eine axial gerichtete Permeatableitbohrung 13 ein, die in radialer Richtung außerhalb der Halteringe 80 liegt.

Bei Anordnung der Gesamtvorrichtung in einer Auffangwanne kann verständlicherweise auf das Leitungssystem 12, 13 verzichtet werden. In diesem Falle kann das Permeat am Außenumfang des Plattenstapels über entsprechende Austrittsspalte abfließen.

Die Trägerplatten 30 sind mit einem planparallelen Randteil 31 versehen, dessen axial gerichtete Stirnflächen dichtend aneinander, bzw. an den Innenflächen der Endplatten 10 und 20 anliegen. Zur Abdichtung ist in der einen axial gerichteten Stirnfläche des Randteiles 31 eine ringsumlaufende O-Dichtung 32 angeordnet. Innerhalb dieser Ringdichtung 32 sind in den Trägerplatten 30 Axialbohrungen 33 vorgesehen, die beim Zusammenbau auf die Axialbohrung 13 der Endplatten ausgerichtet sind. Der sich an die Bohrung 33 anschließende Teil der Trägerplatte 30 hat eine etwas geringere Dickenabmessung, so daß bei gestapelten Trägerplatten Spalten entstehen, über die in nachfolgend noch näher zu erläuternder Weise das Permeat die Axialbohrung 33 (oder eine den Plattenstapel umgebende Wanne) erreichen kann. Zur Mitte hin vermindert sich die axiale Dicke der Trägerplatte 30 bis zu einem Ringbund 36, so daß der Abstand zwischen benachbarten Trägerplatten in diesem Bereich zur Mitte hin stetig größer wird. Die schräg verlaufenden Wandungsteile der Trägerplatte 30 bilden eine Auflage für die mit einer Filterschicht hinterlegten kreisringförmigen Membranen 70. Die Ringbunde 36 befinden sich unmittelbar neben einer Mittelbohrung 37 der Trägerplatte 30. Diese Bohrung 37 ist auf die Mittelbohrung der Endplatten 10 und 20 ausgerichtet. In dem scheibenförmigen Zwischenraum zwischen den einzelnen Trägerplatten bzw. zwischen den endständigen Trägerplatten und den entsprechend ausgespart ausgebildeten angrenzenden Flächen der Endplatten 10 und 20 liegen die Leitplatten 40, welche auf einem größeren Ringabschnitt im wesentlichen parallelwandig ausgebildet sind. Die Leitplatten haben einen verdünnten Mittelabschnitt 41, welcher die Mittelbohrung 11, 37 durchsetzt, so daß in diesen Mittelbohrungen zylindrische Bohrungsabschnitte 42 entstehen.

Am Außenrand der Leitplatte 40 befinden sich Einkerbungen 44 zwischen denen Zahnteile stehenbleiben. Diese Zahnteile tragen eine U-förmig profilierte Ringdichtung 50, die jedoch nur soweit über die einzelnen Zähne hinwegragt, daß Teile der Einkerbung als Übertrittskanäle zwischen den beiden Leitplattenseiten gebildet werden. Es ist zu beachten, daß die U-förmig profilierten äußeren Leitplattendichtungen 50 an benachbarten Trägerplatten zur Anlage kommen.

In den vorerwähnten zylindrischen Kammern 42 der Mittelbohrung befinden sich jeweils zwei L-förmig profilierte Dichtungsringe 61 und 62, mit denen auch die Membranen 70 auf den Trägerplatten 30 gehalten werden.

Die ringscheibenförmige Membrane 70 erstreckt sich in radialer Richtung vom Ringbund 36 bis zum inneren Umfang des Halteringes 80. Das durch die Membrane 70 hindurchtretende Permeat kann unterhalb der U-förmigen Dichtung 50 die Stufenfläche der Trägerplatte 30 erreichen. Damit das Permeat jetzt von dieser Stufenfläche die axialen Bohrungen 33 bzw. 13 und damit die Permeatableitbohrungen 12 erreichen kann, sind die Halteringe 80 an ihrer radial außen liegenden Umfangsfläche mit feinen Rinnen versehen, die vorzugsweise durch eine Rändelung hergestellt sind.

Aus der bisherigen Beschreibung der vorbekannten Vorrichtung zur Wasserentsalzung und -reinigung ist erkennbar, daß das am unteren Ende der Mittelbohrung 11 eintretende Rohwasser zickzackförmig radial den Plattenstapel durchfließen kann. Das Rohwasser strömt zunächst von einem Mittelteil 41 der Leitplatte entlang der letzteren radial nach außen, dann an den Einkerbungen 44 zur gegenüberliegenden Seite der Leitplatte, um dann wieder radial zur Mitte zu strömen und die nachfolgende zylindrische Kammer 42 zu erreichen. Am Ende des Durchlaufs fließt das nichtentsalzte oder ungereinigte und damit aufkonzentrierte Restwasser am oberen Ende der Mittelbohrung 11 wieder ab. Das Permeat sammelt sich jeweils unterhalb der Membrane in der Filterschicht und gelangt um die Halteringe 80 herum zu den Trägerplattenspalten und zum Permeatabfluß 13-12.

Aus der vorstehenden Beschreibung war erkennbar, daß die U-förmigen, auf die Zähne am Umfang der Leitplatte aufgesetzten Dichtungen 50 die Aufgabe haben, die Membranen 70 und die Filterschichten anzudrücken und in ihrer Lage zu halten. Der Zusammenbau ist dadurch erschwert, daß der mit U-förmig profilierter Dichtung 50 versehene Rand der Leitplatte exakt in die Mittelöffnung des dünnen Halteringes 80 eingesetzt werden muß. Um ohne diese umständliche Montage auszukommen und die gesamte Dichtungsanordnung zu verbilligen, werden gemäß der vorliegenden Erfindung die bisher beschriebenen Dichtungen 50 durch die in Fig. 3 und 4 gezeigten Dichtungsringe 100 ersetzt, die außerdem auch die Funktion der Halteringe 80 mitübernehmen.

Wie Fig. 3 und 4 zeigen, werden nunmehr U-förmig profilierte Dichtungsringe 100 verwendet. Jeweils zwei dieser Dichtungsringe 100 arbeiten als ein Paar zusammen und umgeben die mittig zwischen ihnen, aber von ihnen nicht beaufschlagte Leitplatte 40. Jeder Dichtungsring 100 ist U-förmig profiliert. Der Außendurchmesser der Dichtungsringe 100 ist so dimensioniert, daß die Dichtungsringe entsprechend den bisher verwendeten Halteringen 80 in die Ausnehmung der Trägerplatten 30 eingesetzt werden können. Bei der Montage wird in die Ausnehmung der Trägerplatte 30 zunächst genau wie bisher eine ringförmige mit Filterschicht unterlegte Membran 70 eingelegt, die dann dadurch gehalten werden kann, daß man den Dichtungsring in die Ausnehmung der Platte 30 einlegt. Durch die Elastizität des Materials wird der Dichtungsring 100 fest in seiner Ausnehmung gehalten. Der mit geringer Vorspannung nach außen gerichtete lange Schenkel 130 des Dichtungsringes beaufschlagt mit einer sich über den Umfang erstreckenden Nase oder Dichtungsrippe 131 die Oberseite der Membrane 70, so daß das die Leitplatte 40 umströmende Rohwasser die Permeatableitpfade nicht erreichen kann. Das die Membran 70 durchdringende Permeat kann aus dem Bereich unterhalb der Membran in den Raum eintreten, der in der Ausnehmung der Platte 30 außerhalb der Dichtungsnase 131 liegt. Hier sind, wie Fig. 4 zeigt, radiale, geringfügig divergierende Kanäle 111 vorgesehen, die einen Permeatabfluß zum Außenumfang des Dichtungsringes 100 ermöglichen, wo durch Riefung weitere Kanäle ausgebildet sind, die einen Abfluß durch den Spalt zwischen zwei benachbarten Trägerplatten 30 ermöglicht.

Wenn eine Trägerplatte 30 mit Filterschicht und Membran 70 belegt und mit Dichtungsring 100 versehen ist, kann man, wie Fig. 3 erkennen läßt, die Leitplatte 40 frei in den Mittelteil des Dichtungsringes 100 innerhalb des kleineren Schenkels 140 einlegen. Wenn anschließend eine weitere Trägerplatte 30, die in gleicher Weise vorbereitet wurde, aufgelegt wird, stoßen die beiden ebenfalls geringfügig vorgespannten Außenenden der kurzen Dichtungsringschenkel 140 aneinander und sorgen somit außerhalb der Leitplatte 40 für einen vollständigen Abschluß des Rohwasserpfades. An der Basis 120 der Dichtungsringe sind kleine, sich über den Umfang erstreckende Ausnehmungen 113 vorgesehen, die den Dichtungsringen eine größere Elastizität verleihen. Dem gleichen Zweck und der Verbesserung des Permeatabflusses dient auch der sich über den Umfang erstreckende Zwickelraum zwischen zwei benachbarten Dichtungsringen 100.

Bei dem Material der Dichtungsringe handelt es sich vorzugsweise um Lebensmittel-verträgliche Kunststoffe wie zum Beispiel Polypropylen und dergl.

**Patentansprüche**

1. Vorrichtung zur Wasserentsalzung und Wasserreinigung durch Umgekehrte Osmose und Ultrafiltration, bestehend aus zwischen zwei Endplatten (10, 20) eingespannten, abwechselnd aufeinandergestapelten tellerartigen Trägerplatten (30) und Wasserleitplatten (40), zwischen Trägerplatten und Leitplatten liegenden, mit einer Filterschicht hinterlegten ringförmigen Membranen (70), welche membranseitig vom Rohwasser überströmt werden und filterseitig das Permeat ableiten, und am Umfang jeder Wasserleitplatte vorgesehene, zwischen Rohwasser- und Permeatableit-Pfaden liegende Dichtungsanordnungen (50), wobei die Trägerplatten außerhalb der Ränder der Leitplatten mit einem verdickten Randteil aufeinander liegen und über einen durch verminderte Dicke der Trägerplattenrandteile erzeugten Spalt einen Permeatableitpfad bilden, der mit den Filterschichten der Membranen in Verbindung steht, dadurch gekennzeichnet, daß die einzelnen Dichtungsanordnungen aus zwei spiegelbildlich gleichen im wesentlichen U-förmig profilierten Dichtringen (100) aus einem nachgiebigen Kunststoff bestehen, daß die Dichtringe paarweise mit einem ihrer im wesentlichen radial gerichteten Schenkel (140) in der Mittelebene der Leitplatte (40) außerhalb des Leitplattenumfanges dichtend aneinander stoßen (141), jeweils mit dem außenliegenden zweiten Schenkel (130) eine benachbarte Membran (70) dichtend beaufschlagen und an der Außenfläche ihres Jochteiles (120) zur Bildung des Permeatableitpfades mit Riefungen (111, 112) versehen sind.

2. Vorrichtung nach Anspruch 1, dadurch gekennzeichnet, daß die Dichtringe (100) so geformt sind, daß im Ruhezustand ihre Schenkel (130, 140) gegeneinander divergieren.

3. Vorrichtung nach Anspruch 1 und 2, dadurch gekennzeichnet, daß die der Mittelebene der Leitplatte (40) zugewandten Schenkel (140) der Dichtringe (100) an ihrer Außenseite eine plane Oberfläche und eine Randabrundung aufweisen.

4. Vorrichtung nach Anspruch 1 bis 3, dadurch gekennzeichnet, daß die den Membranen (70) zugewandten Schenkel (130) der Dichtungsringe (100) an ihren den Membranen zugewandten Schenkelaußenseiten mit einer ringsum laufenden Dichtungsrippe (131) versehen sind.

5. Vorrichtung nach Anspruch 4, dadurch gekennzeichnet, daß die Dichtungsrippe (131) eine Höhe von weniger als 1 mm und einen an der Spitze abgerundeten Dreiecksquerschnitt hat.

6. Vorrichtung nach Anspruch 1 bis 5, dadurch gekennzeichnet, daß das Material der Dichtungsringe (100) säure- und laugenfest ist.

7. Vorrichtung nach Anspruch 1 bis 6, dadurch gekennzeichnet, daß die Dichtungsringe aus lebensmittel-verträglichen Kunststoffen bestehen.

8. Vorrichtung nach Anspruch 1 bis 7, dadurch gekennzeichnet, daß die Dichtungsringe aus Polypropylen oder Polyvenylidenfluorid (PVDF) bestehen.

**Claims**

1. Apparatus for the demineralization of water and purification of water by reverse osmosis and ultrafiltration, comprising disc-like supporting plates (30) and water-deflecting plates (40), gripped between two end plates (10, 20) and stacked one above the other alternately, annular membranes (70) which lie between supporting plates and deflecting plates and are backed by a filtering layer and over which the untreated water flows at the membrane side and which drain off the permeate at the filter side, and sealing arrangements (50) provided at the circumference of each water-deflecting plate and situated between discharge paths for untreated water and permeate, the supporting plates resting one on the other with a thickened marginal portion outside the edges of the deflecting plates and forming a permeate discharge path through a gap produced by reduced thickness of the marginal portions of the supporting plates, which path is in communication with the filtering layers of the membranes, characterised in that the individual sealing arrangements consist of two sealing rings (100) of a flexible plastics material which are substantially U-shaped in section and alike in mirror-image, that the sealing rings abut against one another (141) with a sealing action, in pairs, with one of their substantially radially directed arms (140) in the centre plane of the deflecting plate (40), outside the circumference of the deflecting plate, act with a sealing action on an adjacent membrane (70) with the outer second arm (130) in each case and are provided with grooving (111, 112) at the outer face of their yoke portion (120) in order to form the permeate discharge path.

2. Apparatus as claimed in Claim 1, characterised in that the sealing rings (100) are so shaped that their arms (130, 140) diverge from one another in the state of rest.

3. Apparatus as claimed in Claims 1 and 2, characterised in that the arms (140) of the sealing rings (100) adjacent to the centre plane of the deflecting plate (40) have a plane surface and a marginal rounding at their outside.

4. Apparatus as claimed in Claims 1 to 3, characterised in that the arms (130) of the sealing rings (100) adjacent to the membranes (70) are provided on their outer sides adjacent the membranes with an all round extending sealing rib (131).

5. Apparatus as claimed in Claim 4, characterised in that the sealing rib (131) has a height of less than 1 mm and a triangular cross-section rounded at the apex.

6. Apparatus as claimed in Claims 1 to 5, characterised in that the material of the sealing rings (100) is acid-proof and alkali-proof.

7. Apparatus as claimed in Claims 1 to 6, characterised in that the sealing rings consist of plastics materials compatible with foodstuffs.

8. Apparatus as claimed in Claims 1 to 7, characterised in that the sealing rings consist of polypropylene or polyvinylidene fluoride (PVDF).

**Revendications**

1. Appareil pour le dessalement et l'épuration d'eau par osmose inverse et ultrafiltration, se composant de plaques directrices d'eau (40) et de plaques portantes (30) en forme d'assiettes, empilées alternativement l'une sur l'autre et serrées entre deux plaques extrêmes (10, 20), de membranes (70) de forme annulaire placées entre les plaques portantes et les plaques directrices, associées à une couche de filtrage, qui sont balayées du côté-membrane par de l'eau brute et qui évacuent le perméat du côté-filtre, et d'ensembles d'étanchéité (50) prévus sur la périphérie de chaque plaque directrice d'eau et situés entre des voies d'évacuation d'eau brute et de perméat, les plaques portantes étant placées l'une sur l'autre, à l'extérieur des bords des plaques directrices, au moyen d'une partie marginale épaissie et formant, par l'intermédiaire d'un intervalle créé par une diminution d'épaisseur des parties marginales des plaques portantes, une voie d'évacuation de perméat, qui est en liaison avec les couches de filtrage des membranes, caractérisé en ce que les différents ensembles d'étanchéité se composent de deux anneaux d'étanchéité (100) symétriquement identiques, profilés sensiblement en forme de U, constitués d'un matériau flexible, en ce que les anneaux d'étanchéité viennent buter de façon étanche l'un contre l'autre (141) par une de leurs branches (140) orientée sensiblement radialement dans le plan médian de la plaque directrice (40) et à l'extérieur de la périphérie de cette plaque directrice, ils s'appliquent respectivement de façon étanche par la seconde branche (130) placée à l'extérieur contre une membrane adjacente (70) et ils sont pourvus de stries (111, 112) sur la surface extérieure de leur partie d'âme (120) pour former la voie d'évacuation de perméat.

2. Appareil selon la revendication 1, caractérisé en ce que les anneaux d'étanchéité (100) sont profilés de telle sorte que, dans la condition de repos, leurs branches (130, 140) divergent l'une par rapport à l'autre.

3. Appareil selon les revendications 1 et 2, caractérisé en ce que les branches (140), dirigées vers le plan médian de la plaque directrice (40), des anneaux d'étanchéité (100) comportent, sur leur côté extérieur, une surface plane et un bord arrondi.

4. Appareil selon les revendications 1 à 3, caractérisé en ce que les branches (130), dirigées vers les membranes (70), des anneaux d'étanchéité (100), sont pourvues d'une nervure d'étanchéité périphérique (131) sur leur côté extérieur de branche tourné vers les membranes.

5. Appareil selon la revendication 4, caractérisé en ce que la nervure d'étanchéité (131) a une hauteur inférieure à 1 mm et a une section droite triangulaire arrondie aux sommets.

6. Appareil selon les revendications 1 à 5, caractérisé en ce que la matière des anneaux d'étanchéité (100) est résistante aux acides et aux lessives.

7. Appareil selon les revendications 1 à 6, caractérisé en ce que les anneaux d'étanchéité sont constitués de matière plastique compatible avec des produits alimentaires.

8. Appareil selon les revendications 1 à 7, caractérisé en ce que les anneaux d'étanchéité sont formés de polypropylène ou de fluorure de polyvinylidène (PVDF).

FIG.1

0 165 948

FIG.2

FIG.3

FIG.4